# EUROPÄISCHE PATENTSCHRIFT

(11) **EP 1 389 707 B1**
(45) Veröffentlichungstag und Bekanntmachung des Hinweises auf die Patenterteilung: **09.04.2008**
(21) Anmeldenummer: 03014947.0
(22) Anmeldetag: 01.07.2003
(51) Int. Cl.: F16M 11/04, H02G 11/00

(54) **Leitungsführung bei einem Deckenstativ mit verschwenkbaren Stativabschnitten**
Guide for ducts in a ceiling mount with pivotable parts
Guidage de lignes d'alimentation dans un support fixé au plafond muni de parties tournantes

(30) Priorität: 16.08.2002 DE 10237484
(43) Veröffentlichungstag der Anmeldung: 18.02.2004
(73) Patentinhaber: MAQUET GmbH & Co. KG, 76437 Rastatt (DE)
(72) Erfinder: Ballhaus, Heribert, Dr., 90562 Heroldsberg (DE); Koch, Guido, 76131 Karlsruhe (DE)
(74) Vertreter: Schaumburg, Thoenes, Thurn, Landskron

(56) Entgegenhaltungen:
- EP-A- 0 299 083
- EP-A- 1 145 807
- DE-U- 8 304 407
- DE-U- 9 215 101
- US-A- 5 479 958
- US-A- 6 095 468
- US-B1- 6 374 589
- PATENT ABSTRACTS OF JAPAN vol. 014, no. 307 (M-0993), 3. Juli 1990 (1990-07-03) -& JP 02 100892 A (FANUC LTD), 12. April 1990 (1990-04-12)

## Beschreibung

Die vorliegende Erfindung betrifft ein Deckenstativ zum Tragen von OP-Leuchten, medizinischen Geräten und dgl. mit zwei um eine Schwenkachse gegeneinander verschwenkbaren Stativabschnitten, bei dem elektrische und/oder Fluidleitungen von einem Stativabschnitt zum anderen geführt werden. Ein solches Deckenstativ ist z.B. aus der US-A-6095468 bekannt.

Deckenstative dieser Art werden beispielsweise als Träger für OP-Leuchten, Monitore oder medizinisches Gerät verwendet. Durch gegeneinander verschwenkbare Stativabschnitte, beispielsweise Schwenkarme oder schwenkbare Geräteträger können die vom Deckenstativ getragenen Geräte in eine geeignete Position gebracht werden.

Zum Betrieb der Geräte werden in der Regel elektrische, oft auch Fluidleitungen (z.B. für Sauerstoff) benötigt, die vom Befestigungsort des Deckenstativs an einer Zimmerdecke zum Gerät geführt werden müssen. Zumeist sind die Stativabschnitte hohl ausgebildet, so dass die Leitungen entlang der einzelnen Stativabschnitte in deren Innerem geführt werden. Bei der Führung der Leitungen von einem Stativabschnitt zum anderen allerdings muss darauf geachtet werden, dass die Leitungen die vorgesehene Schwenkbewegung der Abschnitte nicht behindern und
selbst nicht beschädigt werden. Üblicherweise sind daher die Lagerachsen der Lager, mit denen zwei gegeneinander verschwenkbare Stativabschnitte verbunden sind, hohl ausgebildet, so dass die Leitungen durch sie hindurchgeführt werden können. Dadurch behindern die Leitungen die Schwenkbewegung nicht und erfahren ihrerseits beim Verschwenken der Stativabschnitte gegeneinander keine Zugkräfte.

Allerdings hat die Leitungsführung durch hohle Lagerachsen hindurch erhebliche Nachteile. Zum einen ist die Herstellung eines Lagers mit hohler Lagerachse aufwendiger und somit teurer als die eines herkömmlichen Lagers. Zum andern ist die Anzahl von Leitungen, die gleichzeitig durch die Lagerachse geführt werden, aus Platzgründen stark begrenzt. Besondere Schwierigkeiten treten auf, wenn eine Leitung entfernt oder hinzugefugt werden soll, weil dazu das gesamte Deckenstativ auseinandergenommen werden muss. Außerdem können keine Kabel mit vorkonfektionierten Steckern durch die Lagerachsen gefädelt werden, so dass das Verlegen der Leitungen aufwendiger und teurer wird.

Aus der JP 02100892 A ist ein Industrieroboter bekannt, bei dem innerhalb des Gelenkes, das die Säule des Roboters mit ihrem Sockel verbindet, ein Leitungsbündel mittels einer Gliederkette geführt ist, die einerseits mit dem Sockel und andererseits mit der Säule verbunden ist.

Bei einem aus der US 6374589 B1 bekannten Industrieroboter sind Versorgungsleitungen von der Robotersäule zur Spitze des Roboterarmes mittels einer Gliederkette außen über zwei Gelenke hinweg geführt.

Die EP-A-0299083 zeigt einen Industrieroboter mit einem Leitungskanal, der Leitungen von einem Ausgang an einer Robotersäule in einem radialen Abstand von der Schwenkachse eines gegenüber der Robotersäule schwenkbaren Arms zu einer auf der Schwenkachse gelegenen Befestigungsstelle an dem Arm führt.

Der vorliegenden Erfindung liegt die Aufgabe zugrunde, ein Deckenstativ der eingangs genannten Art anzugeben, bei dem die Leitungen auf einfache und preiswerte Art von einem Stativabschnitt zum anderen geführt werden.

Diese Aufgabe wird durch die im kennzeichnenden Teil des Anspruchs 1 angegebenen Merkmale gelöst. Somit kann die Leitungsaufnahme der Schwenkbewegung durch Änderung ihrer Form innerhalb der zur Schwenkachse orthogonalen Ebene folgen, ohne die Schwenkbewegung zu behindern und ohne dass sich ihre Länge ändern müsste. Da die Länge der Leitungsaufnahme konstant bleibt, treten keine Zugkräfte an den darin geführten Leitungen auf.

Durch die Anordnung der Leitungen in einer zur Schwenkachse orthogonalen Ebene können sie den Schwenkweg der Stativabschnitte nicht kreuzen und insofern die Schwenkbewegung nicht behindern. Außerdem bietet die Leitungsaufnahme einen Schutz gegen Beschädigungen durch äußere Einflüsse.

Mit der Biegbarkeit der Leitungsaufnahme ist in dieser Schrift lediglich die Eigenschaft gemeint, daß sie ihre Form innerhalb der zur Schwenkachse orthogonalen Ebene ändern kann, nicht aber, daß dabei eine nennenswerte Biegekraft aufzubringen wäre. Dies ist im Gegenteil unerwünscht, da die Leitungsaufnahme andernfalls störende Torsionskräfte zwischen den Stativabschnitten erzeugen würde. So wird die Leitungsaufnahme in einer bevorzugten Ausführungsform durch eine Gliederkette gebildet, die biegbar ist, ohne daß dabei Biegekräfte auftreten. Alternativ kann die Leitungsaufnahme durch einen Schlauch oder durch eine Blechspirale gebildet werden.

Dadurch daß der erste und zweite Stativabschnitt in Richtung der Schwenkachse derart gegeneinander versetzt sind, dass sich zwischen den beiden ein Zwischenraum ergibt, der Platz für die Leitungsaufnahme bietet, wird auch bei großen Schwenkwegen verhindert, daß sich die Leitungsaufnahme und die Stativabschnitte behindern.

Es ist wichtig, daß die Leitungsaufnahme in der zur Schwenkachse orthogonalen Ebene stets in Bögen oder Schleifen angeordnet ist, nicht aber gefaltet wird, weil dabei die Leitungen abgeknickt werden könnten. Daher ist die Leitungsaufnahme zumindest auf einem Teil ihrer Länge nur in eine Richtung biegbar, wodurch Faltenbildungen ausgeschlossen werden und sich die Leitungsaufnahme ohne weitere Maßnahmen in Bögen oder Schleifen legt.

In einer vorteilhaften Weiterbildung hat die Leitungsaufnahme zumindest zwei nur in eine Richtung biegbare Abschnitte, deren Biegerichtungen entgegengesetzt sind. Eine derartige Leitungsführung findet unter anderem in einer besonders vorteilhaften Ausführung Verwendung, bei der die Leitungsaufnahme in einer Endstellung der Schwenkbewegung der Stativabschnitte gestreckt ist und in der anderen Endstellung die Form eines Fragezeichens annimmt. Diese Anordnung gestattet eine Verschwenkung der Stativabschnitte gegeneinander von rund 180° bei sehr geringem Platz- und Materialbedarf.

In einer anderen vorteilhaften Weiterbildung unterscheidet sich der radiale Abstand zwischen der Schwenkachse und dem Befestigungsort des einen Endes der Leitungsaufnahme an dem einen Stativabschnitt vom radialen Abstand zwischen der Schwenkachse und dem Befestigungsort des anderen Endes der Leitungsaufnahme am anderen Stativabschnitt, und wickelt sich die Leitungsaufnahme beim Verschwenken der Stativabschnitte gegeneinander spiralartig auf und ab. Eine derartige Anordnung der Leitungsaufnahme ist besonders geeignet, wenn die Stativabschnitte um volle 360° gegeneinander zu verschwenken sind. Mit dem Begriff "spiralartig" ist selbstverständlich nicht gemeint, daß die Leitungsaufnahme die Form einer Spirale im mathematischen Sinne annimmt, sondern daß die Leitungsaufnahme die Schwenkachse im aufgewickelten Zustand in mehr als einer Windung umgibt und der radiale Abstand zwischen Leitungsaufnahme und Schwenkachse dabei von einem Ende der Leitungsaufnahme zum anderen zunimmt.

Vorzugsweise ist dabei an mindestens einem Stativabschnitt eine bezüglich der Schwenkachse radial äußere Anlagefläche angeordnet, an der die Leitungsaufnahme mit einem nach außen weisenden Abschnitt anliegt, wenn sie abgewickelt ist. Ferner ist vorzugsweise an mindestens einem Stativabschnitt eine bezüglich der Schwenkachse radial innere Anlagefläche angeordnet, an der die Leitungsaufnahme mit einem nach radial innen weisenden Abschnitt anliegt, wenn sie aufgewickelt ist. Durch diese Führungsflächen läßt sich die Form der Leitungsaufnahme vorgeben.

Vorzugsweise hat die Leitungsaufnahme im abgewickelten Zustand zwischen 0,75 und 1,25 Windungen. Das bedeutet, daß die Leitungsaufnahme auch im abgewickelten Zustand bereits in einer Schleife ungefähr einmal um die Schwenkachse gelegt ist, was sowohl aus Platz- als auch aus funktionellen Gründen vorteilhaft ist. Vorzugsweise hat die Leitungsaufnahme im aufgewickelten Zustand zwischen 1,75 und 2,25 Windungen.

Bei der bisher beschriebenen Ausführung der Erfindung wurde eine Leitungsaufnahme verwendet, die mit jeweils einem Ende an einem Stativabschnitt befestigt ist und die einem Verschwenken der Stativabschnitte gegeneinander durch eine Biegebewegung, d.h. durch Änderung ihrer Form nachgibt, ohne daß sich ihre Länge ändert. Die Unveränderlichkeit der Länge der Leitungsaufnahme ist für die Funktion wesentlich, da andernfalls Zugkräfte an den darin geführten Leitungen auftreten würden. Dieser Grundgedanke wird in einer abgewandelten Lösung ebenfalls aufgegriffen, bei der die Leitungen in einem Leitungskanal untergebracht sind, der an einem der Stativabschnitte befestigt ist und in dem die Leitungen in einem radialen Abstand von der Schwenkachse an einem die Stativabschnitte verbindenden Lager vorbei zu einem auf der Schwenkachse gelegenen Ort des anderen Stativabschnittes geführt werden.

Bei dieser Lösung werden also die Leitungen außen am Lager vorbei statt wie beim Stand der Technik durch das Lager hindurch geführt. Da die Übergabe der Leitungen von dem Leitungskanal auf den anderen Stativabschnitt ebenfalls auf der Schwenkachse geschieht (wenn auch außerhalb der Lagerachse), treten beim Verschwenken der Stativabschnitte auch bei dieser Lösung keine Zugkräfte an den Leitungen auf.

Die beschriebene Lösung mit dem Leitungskanal wird vorzugsweise verwendet, um die Leitungen von einem Schwenkarm zu einem Lastenträger zu führen.

Weitere Vorteile und Merkmale der erfindungsgemäßen Lösungen ergeben sich aus der folgenden Beschreibung, welche in Verbindung mit den beigefügten Zeichnungen die Erfindung anhand eines Ausführungsbeispieles erläutert. Darin zeigen:
- Figur 1: eine perspektivische Ansicht eines erfindungsgemäßen Deckenstativs, das an der Decke eines schematisch dargestellten Zimmers einer Intensivstation befestigt ist,
- Figur 2: eine perspektivische Ansicht des Deckenstativs von Figur 1,
- Figur 3: eine Seitenansicht einer Gliederkette, die zur Verwendung als Leitungsaufnahme geeignet ist,
- Figur 4: eine Detailansicht des Deckenstativs von Figuren 1 und 2, bei der eine Befestigungsvorrichtung zur Befestigung des Deckenstativs an einer Zimmerdecke und ein erster Schwenkarm gezeigt ist,
- Figur 5: eine Detailansicht des Deckenstativs von Figuren 1 und 2, in der eine spiralartig angeordnete Leitungsaufnahme gezeigt ist,
- Figur 6: eine Detailansicht von Komponenten von Figur 5 in einer perspektivischen Draufsicht und
- Figur 7: eine Detailansicht des Deckenstativs von Figuren 1 und 2, in der ein Kabelkanal gezeigt ist, durch den eine Leitung von einem zweiten Schwenkarm auf einen Lastenträger geführt wird.

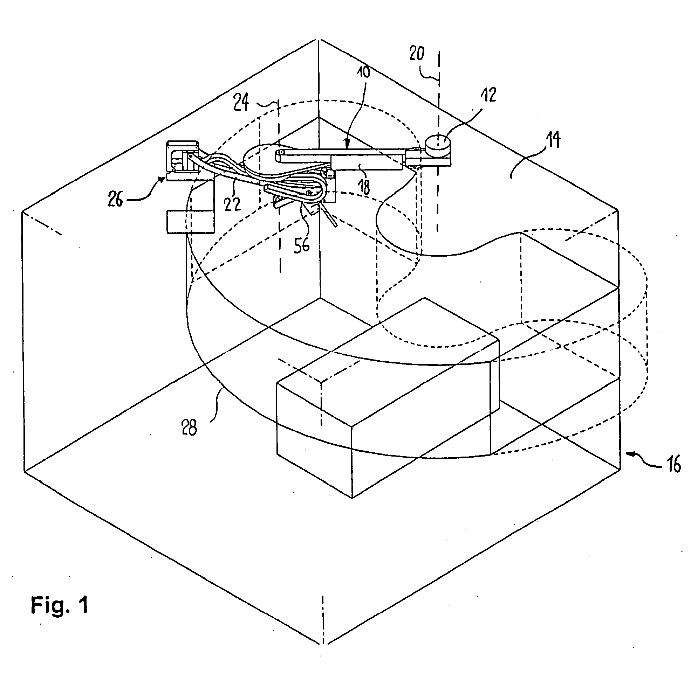

In Figur 1 ist ein erfindungsgemäßes Deckenstativ 10 gezeigt, das mit einer Befestigungsvorrichtung 12 an der Decke 14 eines schematisch dargestellten Zimmers 16 einer Intensivstation befestigt ist. Das Deckenstativ 10 hat einen ersten Schwenkarm 18, der an einem ersten Ende um eine erste vertikale Schwenkachse 20 schwenkbar in der Befestigungsvorrichtung 12 gelagert ist. Am zweiten Ende des ersten Schwenkarmes 18 ist ein zweiter Schwenkarm 22 um eine zweite vertikale Schwenkachse 24 schwenkbar gelagert. Der zweite Schwenkarm 22 ist zusätzlich um sein lastfernes Ende schwenkbar, wodurch ein an seinem freien Ende angeordneter Lastenträger 26 herauf- und heruntergefahren werden kann. Durch horizontales Schwenken des ersten und zweiten Schwenkarmes 18, 22 um die erste bzw. zweite vertikale Schwenkachse 20, 24 und durch vertikales Schwenken des zweiten Schwenkarmes 22 um sein lastfernes Ende kann der Lastenträger 26 innerhalb eines in Figur 1 gezeigten Raumbereiches 28 verstellt werden.

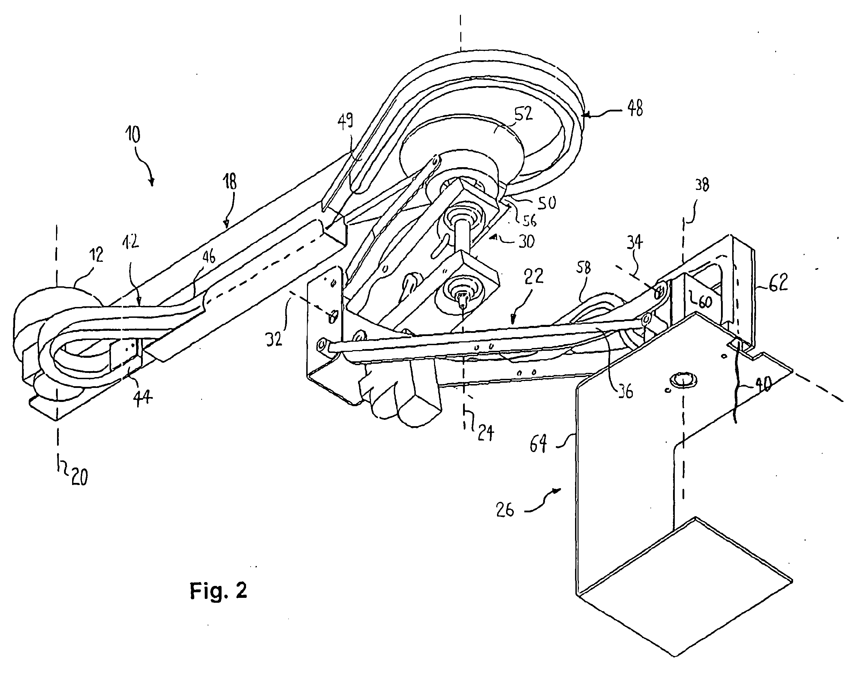

In Figur 2 ist das Deckenstativ 10 von Figur 1 mit heruntergefahrenem Lastenträger 26 perspektivisch dargestellt. Wie in Figur 2 zu sehen, kann der zweite Schwenkarm 22 mit Hilfe eines asymmetrischen Viergelenkes 30 um sein lastfernes Ende, genauer gesagt um eine erste horizontale Schwenkachse 32 geschwenkt werden. Der Lastenträger 26 ist am freien Ende des zweiten Schwenkarmes 22 um eine zweite horizontale Schwenkachse 34 schwenkbar angelenkt, so daß er mit Hilfe eines Parallelogrammlenkers 36 auf hier nicht näher beschriebene Weise stets in einer aufrechten Stellung gehalten werden kann, wenn der zweite Schwenkarm 22 hoch- und heruntergeschwenkt wird. Schließlich ist der Lastenträger 26 um eine dritte vertikale Schwenkachse 38 schwenkbar am freien Ende des zweiten Schwenkarmes 22 gelagert.

Insgesamt besteht das Deckenstativ 10 also aus 4 Stativabschnitten, nämlich der Befestigungsvorrichtung 12, dem ersten Schwenkarm 18, dem zweiten Schwenkarm 22 und dem Lastenträger 26, die gegeneinander um insgesamt 5 Schwenkachsen verschwenkbar sind, nämlich der ersten, zweiten und dritten vertikalen Schwenkachse 20, 24 bzw. 38 und der ersten und zweiten horizontalen Schwenkachse 32 bzw. 34. Ferner werden entlang dieser vier Stativabschnitte Leitungen von der Befestigungsvorrichtung 12 zum Lastenträger 26 geführt, von denen in der Darstellung von Figur 2 der Einfachheit halber nur eine Leitung 40 schematisch eingezeichnet ist.

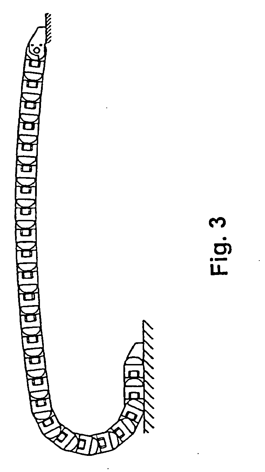

Verfolgen wir die Leitung 40 von der Befestigungsvorrichtung 12 zum Lastenträger 26, so wird sie zunächst in einer aus einer Gliederkette gebildeten ersten Leitungsaufnahme 42 geführt, die mit einem ersten Ende 44 an der Befestigungsvorrichtung 12 und mit einem zweiten Ende 46 am ersten Schwenkarm 18 befestigt ist. Der Klarheit halber ist die die erste Leitungsaufnahme 42 bildende Gliederkette nicht im Detail und für die Leitungen 40 durchsichtig gezeichnet. Eine Seitenansicht der Gliederkette ist in Fig. 3 gezeigt. Sie besteht aus Kunststoffgliedern und hat einen hohlen rechteckigen Querschnitt, der Platz für mehrere Leitungen bietet. Gliederketten dieser Art sind an sich bekannt und beispielsweise von der Firma "igus" unter der Bezeichnung "Energiekette" in verschiedenen Ausführungen erhältlich.

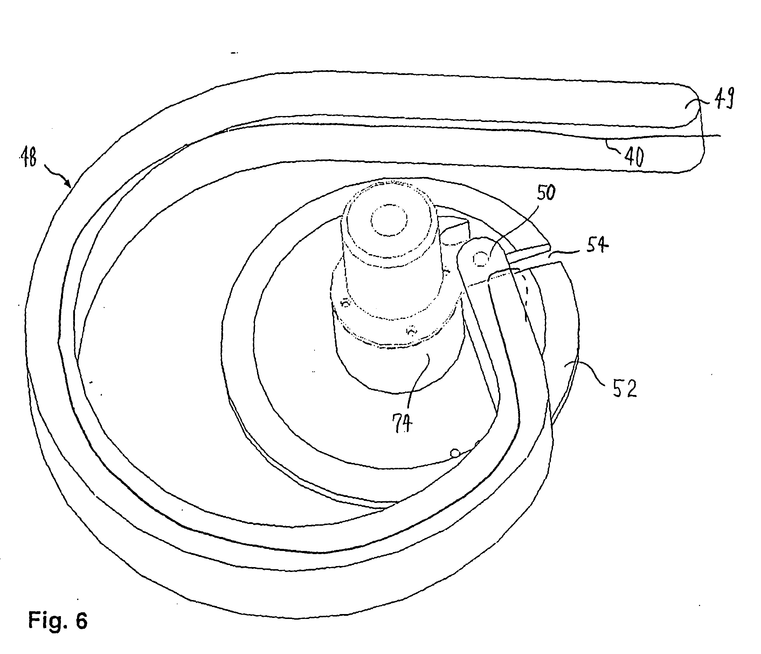

In Fig. 2 wird die Leitung 40 anschließend durch eine zweite Leitungsaufnahme 48 geführt, die mit ihrem ersten Ende 49 am ersten Schwenkarm 18 befestigt ist, in einer Schleife um die zweite vertikale Schwenkachse 24 angeordnet ist und mit ihrem zweiten Ende 50 auf der Oberseite einer Scheibe 52 befestigt ist (siehe auch Figur 6). Die Scheibe 52 ist mit dem zweiten Schwenkarm 22 drehfest bezüglich der zweiten vertikalen Schwenkachse 24 verbunden. Die Leitung 40 wird durch eine Öffnung 54 in der Scheibe 52 geführt (siehe Figur 6) und an der Unterseite der Scheibe 52 in eine dritte Leitungsaufnahme 56 geführt.

Die dritte Leitungsaufnahme 56 ist in Figur 2 größtenteils verdeckt, jedoch in Figur 1 gut zu sehen. Sie ist mit einem Ende an der Unterseite der Scheibe 52 und mit dem anderen Ende am zweiten Schwenkarm 22 befestigt. Anschließend wird die Leitung 40 durch eine vierte Leitungsaufnahme 58 geführt, die mit einem Ende am zweiten Schwenkarm 22 und mit dem anderen Ende an einer Befestigungsvorrichtung 60 des Lastenträgers 26 befestigt ist. Die zweite, dritte und vierte Leitungsaufnahme 48, 56 und 58 werden ebenfalls durch eine Gliederkette von der in Fig. 3 gezeigten Art gebildet und sind in Figur 2 für die Leitung 40 durchsichtig dargestellt.

Schließlich wird die Leitung 40 durch einen Befestigungsabschnitt 60 des Lastenträgers 26 in einen Leitungskanal 62 geführt, der an einen Trageabschnitt 64 des Lastenträgers 26 befestigt ist.

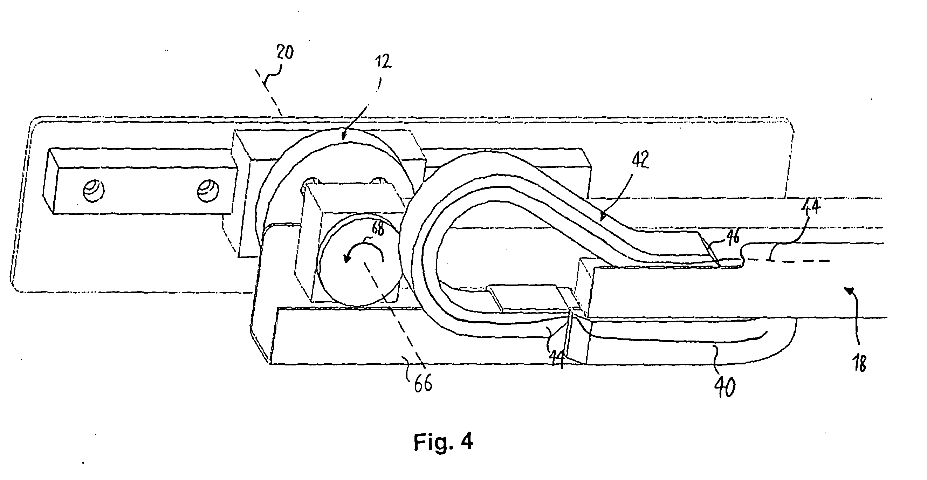

Im folgenden werden einzelne Abschnitte der Leitungsführung näher erläutert. In Figur 4 sind die Befestigungsvorrichtung 12, ein Abschnitt des ersten Schwenkarms 18 und die erste Leitungsaufnahme 42 vergrößert dargestellt. Die Befestigungsvorrichtung 12 beinhaltet einen Rahmen 66, an dem die erste Leitungsaufnahme 62 mit ihrem ersten Ende 44 befestigt ist.

Der erste Schwenkarm 18 ist in Figur 4 in der einen Endstellung seiner Schwenkbewegung gezeigt und kann in der durch den Pfeil 68 angezeigten Richtung um 180° (in Figur 4 entgegen dem Uhrzeigersinn) geschwenkt werden. In der anderen Endstellung der Schwenkbewegung ist die Leitungsaufnahme 42 gestreckt, während sie in der gezeigten Endstellung die Form eines Fragezeichens annimmt. Die Fragezeichenform wird dadurch vorgegeben, daß die Leitungsaufnahme 42 auf dreiviertel ihrer Länge, beginnend am ersten Ende 44 nur in einer Richtung biegbar ist, und auf dem Rest der Länge nur in die andere, entgegengesetzte Richtung biegbar ist. Auf beiden Abschnitten ist die maximale Biegung der Gliederkette baulich beschränkt, so daß die Leitung 40 in der ersten Leitungsaufnahme 42 nicht geknickt werden kann.

Beim Verschwenken des ersten Schwenkarmes 18 ändert sich der räumliche Abstand zwischen dem ersten Ende 44 und dem zweiten Ende 46 der ersten Leitungsaufnahme 42, nicht jedoch die Länge der Leitungsaufnahme selbst. Daher erfährt die darin untergebrachte Leitung 40 beim Verschwenken keine Zugkraft. Die Leitungsaufnahme 42 ist in einer zur ersten vertikalen Schwenkachse 20 orthogonalen Ebene angeordnet und ist um zur ersten vertikalen Schwenkachse 20 parallele Krümmungsachsen biegbar, so daß sie sich bei gleichbleibender Länge auf die Veränderung des Abstandes ihrer Enden durch Änderung ihrer Form einstellen kann.

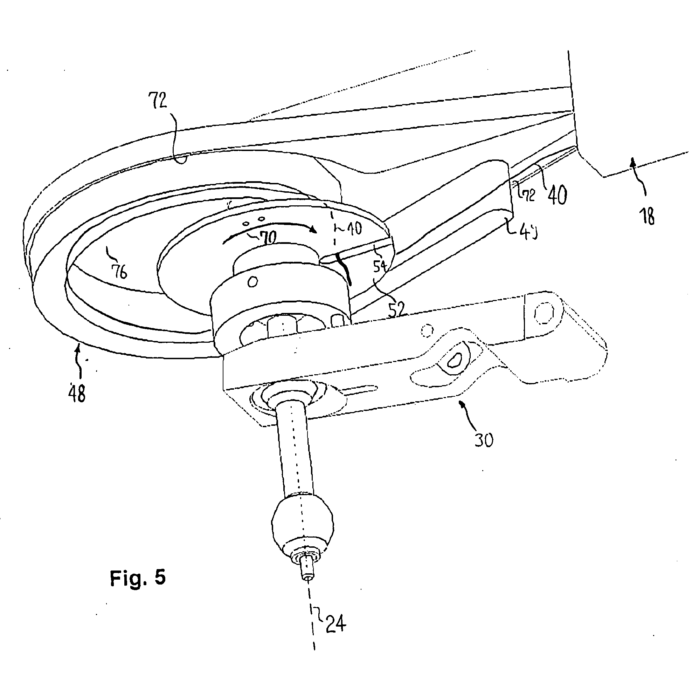

In den Figuren 5 und 6 ist die zweite Leitungsaufnahme 48 im Detail gezeigt. Die zweite Leitungsaufnahme 48 ist mit ihrem ersten Ende 49 am ersten Schwenkarm 18 (siehe Figur 5) und mit ihrem zweiten Ende 50 (Fig. 6) auf der Oberseite der Scheibe 52 befestigt. Der radiale Abstand des ersten Endes 49 von der zweiten vertikalen Schwenkachse 24 ist größer als derjenige des zweiten Endes 50. In Figur 5 ist eine Endstellung der Schwenkbewegung gezeigt, bei der die zweite Leitungsaufnahme 48 in einer spiralartigen Windung um die zweite vertikale Schwenkachse 24 angeordnet ist. Aus dieser Einstellung kann die mit dem zweiten Schwenkarm 22 (nicht gezeigt) drehfest verbundene Scheibe 52 in der mit dem Pfeil 70 gekennzeichneten Richtung um 360° um die zweite vertikale Schwenkachse 24 in die andere Endstellung geschwenkt werden, wobei sich die zweite Leitungsaufnahme 48 spiralartig aufwickelt und schließlich zwei Windungen hat. Durch die gezeigte Anordnung wird also eine Verschwenkbarkeit des ersten und zweiten Schwenkarmes 18, 22 um 360° gegeneinander ermöglicht, ohne dass die Leitung 40 geknickt oder Zugkräften ausgesetzt würde.

Die zweite Leitungsaufnahme 48 ist über ihre gesamte Länge nur in eine Richtung biegbar, so daß sich unweigerlich eine spiralartige Form ergibt. Darüber hinaus ist am ersten Schwenkarm 18 eine bezüglich der zweiten vertikalen Schwenkachse 24 radial äußere Anlagefläche 72 angeordnet, an der die zweite Leitungsaufnahme 48 im in Figur 5 gezeigten abgewickelten Zustand mit einem nach radial außen weisenden Abschnitt anliegt. Wie in Figur 6 zu sehen ist an der Scheibe 52 ein zylindrischer Abschnitt angeordnet, dessen Mantel eine radial innere Anlagefläche 74 bildet, an der die zweite Leitungsaufnahme 48 mit einem nach radial innen weisenden Abschnitt anliegt, wenn sie aufgewickelt ist (nicht gezeigt). Durch die innere und äußere Anlagefläche 76, 74 wird die Form der zweiten Leitungsaufnahme 48 zu einem gewissen Grade vorgegeben.

Die äußere Anlagefläche 72 ist als überstehender Rand einer horizontalen Platte 76 ausgebildet (Figur 5). Die horizontale Platte 76 und die äußere Anlage 72 können zu einem Gehäuse weitergebildet werden, in dem die zweite Leitungsaufnahme 48 vollständig untergebracht ist. Eine Bodenplatte (nicht gezeigt) dient dann als Auflage für die zweite Leitungsaufnahme 48.

Die Anordnung der ersten Leitungsaufnahme 42 von Fig. 4 eignet sich besonders für Stativabschnitte, die um rund 180° gegeneinander zu verschwenken sind. Eine Verschwenkung um 360° ist bei dieser Anordnung hingegen nicht möglich, da sich die erste Leitungsaufnahme 42 und der erste Schwenkarm 18 in der gleichen horizontalen Ebene befinden.

In der Anordnung der zweiten Leitungsaufnahme 48 von Fig. 5 und 6 sind der erste und zweite Schwenkarm 18, 22 bezüglich der zweiten Schwenkachse 24 derart gegeneinander versetzt, daß sich zwischen den beiden ein Zwischenraum ergibt, der Platz für die zweite Leitungsaufnahme 48 bietet. Daher können der erste und zweite Schwenkarm 18, 22 um volle 360° gegeneinander verschwenkt werden, ohne daß ihnen dabei die zweite Leitungsaufnahme 48 im Wege wäre.

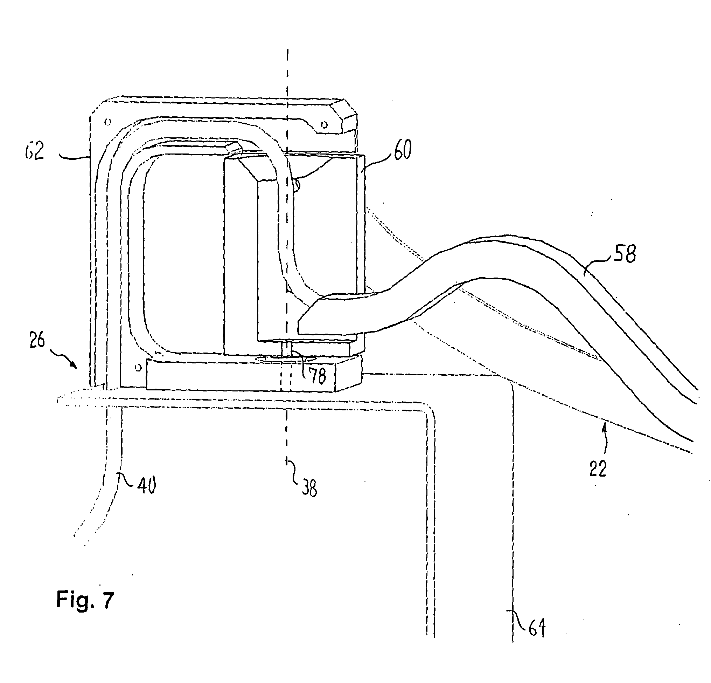

In Figur 7 ist ein Teil des Lastenträgers 26 gezeigt, der mit einem Befestigungsabschnitt 60 am freien Ende des zweiten Schwenkarmes 22 angelenkt ist. Der Befestigungsabschnitt 60 und der Trageabschnitt 64 des Lastenträgers 26 sind mit einem Lager 78 (teilweise gestrichelt gezeichnet) um die dritte vertikale Schwenkachse 38 schwenkbar miteinander verbunden. Die Leitung 40 wird durch den am Trageabschnitt 64 befestigten Leitungskanal 62 in einem radialen Abstand am Lager 78 vorbei und anschließend nach radial innen bis zu einer Mittelachse des Befestigungsabschnittes 60 geführt, die mit der dritten vertikalen Schwenkachse 38 zusammenfällt. Dadurch können der Trageabschnitt 64 und der Befestigungsabschnitt 60 des Lastenträgers 26 gegeneinander verschwenkt werden, ohne dass Zugkräfte auf die Leitung 40 ausgeübt werden.

Man beachte, daß der Befestigungsabschnitt 60 im Sinne der eingangs erwähnten allgemeinen Unterteilung des Deckenstativs in gegeneinander verschwenkbare Stativabschnitte in Bezug auf die hier betrachtete Schwenkbewegung um die dritte vertikale Schwenkachse 38 dem Schwenkarm 22 zuzurechnen wäre, und nicht dem Lastenträger 26.

### Bezugszeichenliste

- 10: Deckenstativ
- 12: Befestigungsvorrichtung
- 14: Zimmerdecke
- 16: Zimmer einer Intensivstation
- 18: erster Schwenkarm
- 20: erste vertikale Schwenkachse
- 22: zweiter Schwenkarm
- 24: zweite vertikale Schwenkachse
- 26: Lastenträger
- 28: dem Lastenträger 26 zugängiger Bereich
- 30: Gelenkviereck
- 32: erste horizontale Schwenkachse
- 34: zweite horizontale Schwenkachse
- 36: Parallelogrammlenker
- 38: dritte vertikale Schwenkachse
- 40: Leitung
- 42: erste Leitungsaufnahme
- 44: erstes Ende der ersten Leitungsaufnahme
- 46: zweites Ende der ersten Leitungsaufnahme
- 48: zweite Leitungsaufnahme
- 49: erstes Ende der zweiten Leitungsaufnahme
- 50: zweites Ende der zweiten Leitungsaufnahme
- 52: Scheibe
- 54: Öffnung
- 56: dritte Leitungsaufnahme
- 58: vierte Leitungsaufnahme
- 60: Befestigungsabschnitt
- 62: Leitungskanal
- 64: Trageabschnitt
- 66: Rahmen
- 68: Drehrichtung
- 70: Drehrichtung
- 72: äußere Anlagefläche
- 74: innere Anlagefläche
- 76: Platte
- 78: Lager

## Patentansprüche

1. Deckenstativ (10) zum Tragen von OP-Leuchten, medizinischem Gerät und dgl. mit zwei um eine Schwenkachse gegeneinander verschwenkbaren Stativabschnitten (12, 18, 22, 26), bei dem elektrische und/oder Fluidleitungen (40) von einem Stativabschnitt zum anderen geführt werden, **dadurch gekennzeichnet, dass** die Leitungen (40) zwischen den Stativabschnitten (12, 18, 22, 26) in einer länglichen Leitungsaufnahme (42, 48, 56, 58) geführt werden, die mit jeweils einem Ende an jeweils einem Stativabschnitt (12, 18, 22, 26) befestigt ist, sich dazwischen in einer zur Schwenkachse (20, 24, 32, 34, 38) orthogonalen Ebene erstreckt und um eine zur Schwenkachse (20, 24, 32, 34, 38) parallele Krümmungsachse biegbar ist, wobei die Leitungsaufnahme (42, 48, 56, 58) zumindest auf einem Teil ihrer Länge nur in eine Richtung biegbar ist, und dass der erste und zweite Stativabschnitt (18, 22) axial bezüglich der Schwenkachse (24) derart gegeneinander versetzt sind, dass sich zwischen den beiden ein Zwischenraum ergibt, der Platz für die Leitungsaufnahme (48) bietet.

2. Deckenstativ (10) nach Anspruch 1, **dadurch gekennzeichnet, dass** die Leitungsaufnahme (42, 48, 56, 58) durch eine Gliederkette gebildet wird.

3. Deckenstativ (10) nach Anspruch 1, **dadurch gekennzeichnet, dass** die Leitungsaufnahme (42, 48, 56, 58) durch einen Schlauch gebildet wird.

4. Deckenstativ (10) nach Anspruch 1, **dadurch gekennzeichnet, dass** die Leitungsaufnahme (42, 48, 56, 58) durch eine Blechspirale gebildet wird.

5. Deckenstativ (10) nach einem der Ansprüche 1 bis 4, **dadurch gekennzeichnet, dass** die Leitungsaufnahme (42) zumindest zwei nur in eine Richtung biegbare Abschnitte hat, deren Biegerichtungen einander entgegengesetzt sind.

6. Deckenstativ (10) nach Anspruch 5, **dadurch gekennzeichnet, dass** die Leitungsaufnahme (42) in einer Endstellung der Schwenkbewegung der Stativabschnitte (12, 18) gestreckt ist und in der anderen Endstellung die Form eines Fragezeichens annimmt.

7. Deckenstativ (10) nach einem der vorhergehenden Ansprüche, **dadurch gekennzeichnet, dass** sich der radiale Abstand zwischen der Schwenkachse (24) und dem Befestigungsort des einen Endes (49) der Leitungsaufnahme (48) am einen Stativabschnitt (18) vom radialen Abstand zwischen der Schwenkachse (24) und dem Befestigungsort des anderen Endes (50) der Leitungsaufnahme (48) am anderen Stativabschnitt (22) unterscheidet, und sich die Leitungsaufnahme (48) beim Verschwenken der Stativabschnitte (18, 22) gegeneinander spiralartig auf- und abwickelt.

8. Deckenstativ (10) nach Anspruch 7, **dadurch gekennzeichnet, dass** an mindestens einem Stativabschnitt (19) eine bezüglich der Schwenkachse (24) radial äußere Anlagefläche (72) angeordnet ist, an der die Leitungsaufnahme (48) mit einem nach radial außen weisenden Abschnitt anliegt, wenn sie abgewickelt ist.

9. Deckenstativ nach Anspruch 7 oder 8, **dadurch gekennzeichnet, dass** an mindestens einem Stativabschnitt (22) eine bezüglich der Schwenkachse (24) radial innere Anlagefläche (74) angeordnet ist, and der die Leitungsaufnahme (48) mit einem nach radial innen weisenden Abschnitt anliegt, wenn sie aufgewickelt ist.

10. Deckenstativ (10) nach einem der Ansprüche 7 bis 9, **dadurch gekennzeichnet, dass** die Leitungsaufnahme (48) im abgewickelten Zustand zwischen 0,75 und 1,25 Windungen hat.

11. Deckenstativ (10) nach einem der Ansprüche 7 bis 10, **dadurch gekennzeichnet, dass** die Leitungsaufnahme (48) im aufgewickelten Zustand zwischen 1,75 und 2,25 Windungen hat.

12. Deckenstativ (10) nach einem der vorhergehenden Ansprüche, **dadurch gekennzeichnet, dass** der eine Stativabschnitt durch eine Befestigungsvorrichtung (12) zur Befestigung des Deckenstativs (10) an einer Zimmerdecke (14) und der andere Stativabschnitt durch einen Schwenkarm (18) gebildet wird.

13. Deckenstativ (10) nach einem der Ansprüche 1 bis 11, **dadurch gekennzeichnet, dass** die beiden Stativabschnitte durch Schwenkarme (18, 22) gebildet werden.

## Claims

1. Ceiling mount (10) for supporting operating theatre lights, a medical device and the like having two mount portions (12, 18, 22, 26) which can be pivoted with respect to each other about a pivot axis, wherein electrical and/or fluid lines (40) are guided from one mount portion to the other, **characterised in that** the lines (40) are guided between the mount portions (12, 18, 22, 26) in an oblong line receptacle (42, 48, 56, 58) which is attached in each case at one end to a respective mount portion (12, 18, 22, 26), extends therebetween in a plane orthogonal to the pivot axis (20, 24, 32, 34, 38) and can be bent about an axis of curvature which is in parallel with the pivot axis (20, 24, 32, 34, 38), wherein the line receptacle (42, 48, 56, 58) can be bent in only one direction at least on a portion of its length, and that the first and the second mount portions (18, 22) are offset with respect to each other in an axial manner in relation to the pivot axis (24) such that between the two portions an intermediate space is produced which provides space for the line receptacle (48).

2. Ceiling mount (10) as claimed in claim 1, **characterised in that** the line receptacle (42, 48, 56, 58) is formed by means of a plain coil chain.

3. Ceiling mount (10) as claimed in claim 1, **characterised in that** the line receptacle (42, 48, 56, 58) is formed by a hose.

4. Ceiling mount (10) as claimed in claim 1, **characterised in that** the line receptacle (42, 48, 56, 58) is formed by a sheet metal coil.

5. Ceiling mount (10) as claimed in any one of claims 1 to 4, **characterised in that** the line receptacle (42) has at least two portions which can be bent in only one direction and whose bending directions are mutually opposed.

6. Ceiling mount (10) as claimed in claim 5, **characterised in that** the line receptacle (42) is elongated in one end position of the pivot movement of the mount portions (12, 18) and assumes the shape of a question mark in the other end position.

7. Ceiling mount (10) as claimed in any one of the preceding claims, **characterised in that** the radial distance between the pivot axis (24) and the attachment site of one end (49) of the line receptacle (48) to one mount portion (18) differs from the radial distance between the pivot axis (24) and the attachment site of the other end (50) of the line receptacle (48) to the other mount portion (22) and the line receptacle (48) winds up and unwinds in the manner of a coil as the mount portions (18, 22) are pivoted with respect to each other.

8. Ceiling mount (10) as claimed in claim 7, **characterised in that** disposed on at least one mount portion (19) is a bearing surface (72) which is radially outer in relation to the pivot axis (24) and against which the line receptacle (48) lies with a radially outwardly pointing portion when it is unwound.

9. Ceiling mount as claimed in claim 7 or 8, **characterised in that** disposed on at least one mount portion (22) is a bearing surface (74) which is radially inner in relation to the pivot axis (24) and against which the line receptacle (48) lies with a radially inwardly pointing portion when it is wound up.

10. Ceiling mount (10) as claimed in any one of claims 7 to 9, **characterised in that** in the unwound state the line receptacle (48) has between 0.75 and 1.25 windings.

11. Ceiling mount (10) as claimed in any one of claims 7 to 10, **characterised in that** in the wound-up state the line receptacle (48) has between 1.75 and 2.25 windings.

12. Ceiling mount (10) as claimed in any one of the preceding claims, **characterised in that** one mount portion is formed by means of an attachment device (12) for attaching the ceiling mount (10) to a ceiling (14) of a room and the other mount portion is formed by means of a pivot arm (18).

13. Ceiling mount (10) as claimed in any one of claims 1 to 11, **characterised in that** the two mount portions are formed by means of pivot arms (18, 22).

## Revendications

1. Support fixé au plafond (10) qui est destiné à supporter des appareils d'éclairage de salles d'opération, un appareil médical et analogues, qui comporte des parties de support (12, 18, 22, 26) aptes à pivoter l'une par rapport à l'autre autour d'un axe de pivotement, et dans lequel des lignes électriques et/ou des conduites de fluide (40) sont guidées d'une partie de support à l'autre, **caractérisé en ce que** les lignes/conduites (40) sont guidées entre les parties de support (12, 18, 22, 26) dans un logement de lignes/conduites allongé (42, 48, 56, 58) qui est fixé, à chacune de ses extrémités, à une portion de support associée (12, 18, 22, 26), qui s'étend entre ces portions de support dans un plan orthogonal à l'axe de pivotement (20, 24, 32, 34, 38) et qui peut se plier autour d'un axe d'incurvation parallèle à l'axe de pivotement (20, 24, 32, 34, 38), le logement de lignes/conduites (42, 48, 56, 58) ne pouvant être plié au moins sur une partie de sa longueur que dans une direction, **en ce que** les première et deuxième parties de support (18, 22) sont décalées l'une de l'autre axialement par rapport à l'axe de pivotement (24), et **en ce qu'**un espace intermédiaire, qui offre de la place au logement de lignes/conduites (48), est ménagé entre lesdites deux portions de support.

2. Support fixé au plafond (10) selon la revendication 1, **caractérisé en ce que** le logement de lignes/conduites (42, 48, 56, 58) est formé par une chaîne à maillons.

3. Support fixé au plafond (10) selon la revendication 1, **caractérisé en ce que** le logement de lignes/conduites (42, 48, 56, 58) est formé par un tuyau.

4. Support fixé au plafond (10) selon la revendication 1, **caractérisé en ce que** le logement de lignes/conduites (42, 48, 56, 58) est formé par une tôle en spirale.

5. Supports fixé au plafond (10) selon l'une des revendications 1 à 4, **caractérisé en ce que** le logement de lignes/conduites (42) comporte au moins deux parties qui ne peuvent se plier que dans une direction, et dont les directions de pliage sont opposées l'une à l'autre.

6. Support fixé au plafond (10) selon la revendication 5, **caractérisé en ce que** le logement de lignes/conduites (42) est allongé dans une position d'extrémité du mouvement de pivotement des parties de support (12, 18), et prend, dans l'autre position d'extrémité, la forme d'un point d'interrogation.

7. Support fixé au plafond (10) selon l'une des revendications précédentes, **caractérisé en ce que** la distance radiale entre l'axe de pivotement (24) et l'endroit de fixation de l'une (49) des extrémités du logement de lignes/conduites (48) à une partie de support (18) diffère de la distance radiale entre l'axe de pivotement (24) et l'endroit de fixation de l'autre extrémité (50) du logement de lignes/conduites (48) à l'autre partie de support (22), et le logement de lignes/conduites (48) est enroulé et déroulé en spirale lorsque l'on fait pivoter les parties de support (18, 22) l'une par rapport à l'autre.

8. Support fixé au plafond (10) selon la revendication 7, **caractérisé en ce qu'**en au moins une partie de support (22) est disposée une surface d'appui (72), radialement extérieure par rapport à l'axe de pivotement (24), sur laquelle le logement de lignes/conduites (48) appuie au niveau d'une partie dirigée radialement vers l'extérieur lorsqu'il est déroulé.

9. Support fixé au plafond selon la revendication 7 ou 8, **caractérisé en ce qu'**en au moins une partie de support (22) est disposée une surface d'appui (74), radialement intérieure par rapport à l'axe de pivotement (24), sur laquelle le logement de lignes/conduites (48) appuie au niveau d'une partie dirigée radialement vers l'intérieur lorsqu'il est enroulé.

10. Support fixé au plafond (10) selon l'une des revendications 7 à 9, **caractérisé en ce que** le logement de lignes/conduites (48) possède entre 0,75 et 1,25 enroulement lorsqu'il est déroulé.

11. Support fixé au plafond (10) selon l'une des revendications 7 à 10, **caractérisé en ce que** le logement de lignes/conduites (48) comporte entre 1,75 et 2,25 enroulements lorsqu'il est enroulé.

12. Support fixé au plafond (10) selon l'une des revendications précédentes, **caractérisé en ce que** l'une des parties de support est formée par un dispositif de fixation (12) destiné à fixer le support de plafond (10) au plafond (14) d'une pièce et l'autre partie de support est formée par un bras pivotant (18).

13. Support fixé au plafond (10) selon l'une des revendications 1 à 11, **caractérisé en ce que** les deux parties de support sont formées par des bras pivotants (18, 22).
